# FASCICULE DE BREVET EUROPEEN

(11) **EP 3 484 026 B1**
(45) Date de publication et mention de la délivrance du brevet: **01.03.2023**
(21) Numéro de dépôt: 18205449.4
(22) Date de dépôt: 09.11.2018
(51) Int. Cl.: H02K 9/18, H02K 9/10, H02K 1/20, H02K 1/32

(54) **MOTEUR ÉLECTRIQUE COMPRENANT UN ÉCHANGEUR ET UNE PLURALITÉ DE CIRCUITS DE REFROIDISSEMENT**
ELEKTROMOTOR, DER EINEN WÄRMETAUSCHER UND EINE VIELZAHL VON KÜHLKREISLÄUFEN UMFASST
ELECTRIC MOTOR COMPRISING AN EXCHANGER AND A PLURALITY OF COOLING CIRCUITS

(30) Priorité: 10.11.2017 FR 1760614
(43) Date de publication de la demande: 15.05.2019
(73) Titulaire: ALSTOM Transport Technologies, 93400 Saint-Ouen (FR)
(72) Inventeur: BOUALEM, Benali, 25660 Saone (FR)
(74) Mandataire: Lavoix

(56) Documents cités:
- EP-A1- 2 975 742
- EP-A1- 3 098 949
- DE-A1- 19 919 040
- JP-A- 2017 201 878
- JP-U- S5 789 369
- US-A1- 2004 150 270

## Description

La présente invention concerne un moteur électrique comprenant un stator et un rotor du type comprenant :
- un bâti définissant un volume intérieur clos ;
- un rotor et un stator formant une partie d'un circuit magnétique, le rotor et le stator étant logés dans le volume intérieur clos ;
- au moins un échangeur extérieur au bâti, l'échangeur comprenant au moins une conduite primaire et au moins une conduite secondaire en contact thermique avec la ou chaque conduite primaire, la conduite secondaire étant reliée au volume intérieur clos pour former un circuit secondaire de refroidissement de circulation d'un fluide interne ;
- un dispositif de ventilation relié à la ou chaque conduite primaire pour forcer la circulation d'un fluide externe de refroidissement à travers de la ou de chaque conduite primaire entre une entrée d'aspiration et au moins une sortie de refoulement, chacune en communication fluidique avec l'extérieur du moteur.

Le moteur comprend un bâti formant un espace intérieur dans lequel le rotor et le stator sont logés.

Un tel moteur est décrit notamment dans US 5866959.

JP 2017 201878 A et EP 3 098 949 A1 décrivent chacun des moteurs électriques.

JP S57 89369 U décrit un moteur électrique avec ventilateur de refroidissement.

Généralement, le moteur comprend un circuit primaire de refroidissement et un circuit secondaire de refroidissement, séparé du circuit primaire de refroidissement.

Le circuit primaire est en communication fluidique avec l'extérieur d'un bâti du moteur de sorte à permettre à un fluide externe de circuler dans le circuit primaire, par exemple de l'air extérieur. L'air extérieur est par exemple conduit à partir de l'extérieur dans le circuit primaire par un ventilateur monté sur un axe du rotor. Le ventilateur tourne avec l'axe du rotor.

Le circuit secondaire est par exemple configuré pour refroidir des éléments dans l'espace interne du moteur. Le circuit secondaire n'est pas en communication fluidique avec l'extérieur du bâti afin d'éviter que des poussières, par exemple, ne viennent enrayer ou encrasser des éléments à l'intérieur du moteur.

Le moteur comprend en outre un échangeur thermique. Le circuit primaire et le circuit secondaire passent, séparés l'un à l'autre, par l'échangeur de sorte à permettre un échange thermique entre l'air extérieur et un fluide circulant dans le circuit secondaire. Le fluide dans le circuit secondaire est alors refroidi par échange thermique avec l'air extérieur.

Toutefois, les moteurs comprenant des circuits de refroidissement tels que décrits ne donnent pas entièrement satisfaction quant à l'effet de refroidissement des éléments du moteur, notamment du stator et du rotor.

Un but de l'invention est de proposer un moteur électrique comprenant un circuit primaire et un circuit secondaire présentant une efficacité plus grande que dans l'état de la technique.

A cet effet, l'invention a pour objet un moteur selon la revendication 1.

Le moteur électrique selon l'invention peut en outre être selon l'une quelconque des revendications 2 à 9.

L'invention sera mieux comprise à la lecture de la description qui va suivre, donnée uniquement à titre d'exemple et faite en se référant aux dessins annexés sur lesquels :
- la figure 1 est une demi-section longitudinale d'un moteur électrique selon l'invention, selon un premier plan ;
- la figure 2 est une demi-section selon un deuxième plan du moteur de la figure 1, le deuxième plan incliné par rapport au premier plan ;
- la figure 3 est une coupe selon un troisième plan III du moteur des figures 1 et 2 ;
- la figure 4 est une coupe selon un quatrième plan IV ; et
- la figure 5 est une coupe identique à celle de la figure 4 d'un deuxième mode de réalisation du moteur selon l'invention.

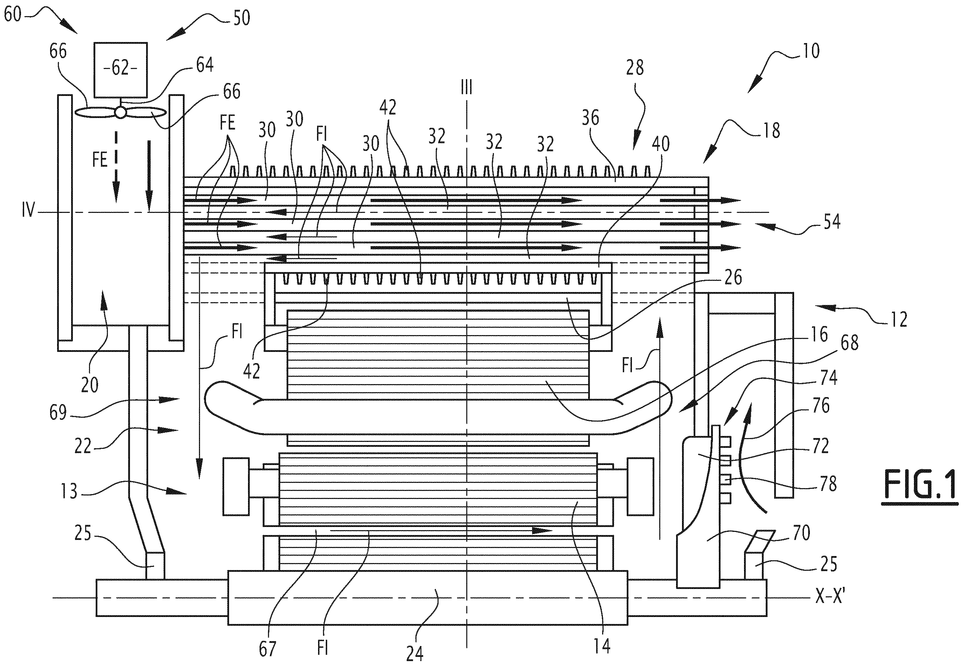

On a représenté sur les figures 1 à 4 un moteur 10 électrique selon un premier mode de réalisation de l'invention. Le moteur 10 est par exemple un moteur asynchrone ou un moteur synchrone à aimants permanents.

Le moteur 10 comprend un bâti 12, ou carter, définissant un volume intérieur clos 13 au moteur 10, ainsi qu'un rotor 14 et un stator 16 logés dans le volume intérieur clos 13. Le moteur 10 comprend, en outre, au moins un échangeur 18 extérieur au bâti 12 relié à un circuit primaire 20 de refroidissement assurant la circulation d'air extérieur pour refroidir notamment le stator 16 et relié à un circuit secondaire 22 de refroidissement assurant la circulation en circuit fermé d'air interne du moteur 10 pour refroidir notamment le rotor 14.

Le rotor 14 est monté solidaire en rotation sur un arbre de rotation 24 à l'intérieur du bâti 12. Le bâti 12 supporte l'arbre de rotation 24 par des roulements 25 reliant le bâti 12 et l'arbre de rotation 24.

Le rotor 14 est monté mobile en rotation autour d'un axe de rotation X-X' par rapport au stator 16. Le stator 16 entoure le rotor 14 parallèlement à l'axe de rotation X-X' à l'intérieur du bâti 12 et est coaxial au rotor 14. De façon classique, le rotor 14 et le stator 16 permettent de transformer une énergie électrique en une énergie mécanique délivrée par l'arbre de rotation 24 du rotor 14.

Le stator 16 comporte par exemple un empilement de tôles magnétiques pour le guidage du flux magnétique et forme ainsi une partie du circuit magnétique du moteur 10. Le stator 16 comprend une paroi externe 26 (visible en particulier sur la figure 1).

L'échangeur 18 est adapté pour échanger une portion d'énergie thermique entre un fluide externe FE gazeux (décrit plus en détail ci-dessous) circulant dans le circuit primaire 20 de refroidissement et un fluide interne FI gazeux circulant dans le circuit secondaire 22 de refroidissement. L'échangeur 18 est situé à l'extérieur du bâti 12.

L'échangeur 18 comporte un boîtier 28 tubulaire traversé de part en part par des conduites primaires 30 (décrites ci-dessous). L'espace délimité entre les conduites primaires 30 et le boîtier 28 forme une conduite secondaire 32 reliée, à chaque extrémité, à l'espace clos du bâti 12 par deux piquages 33A, 33B.

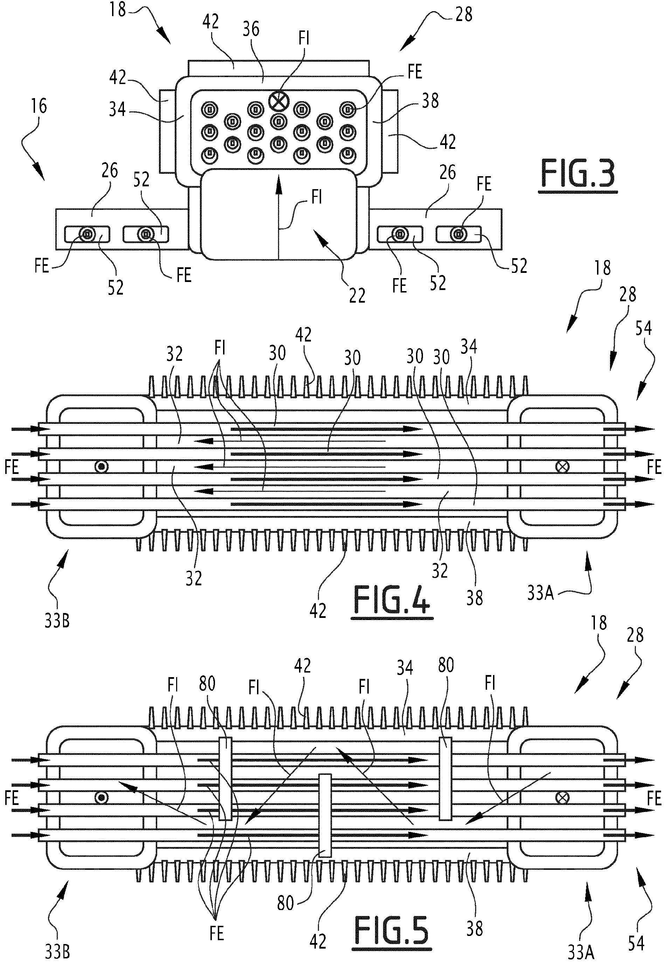

Le boîtier 28 est de section rectangulaire et comprend quatre parois externes 34, 36, 38 et 40 s'étendant toutes longitudinalement selon l'axe X-X' comme visible sur les figures 1 et 3.

Les parois externes 34, 36, 38 sont situées vers l'extérieur du moteur 10 tandis que la paroi externe 40 est située vers le bâti 12 du moteur 10. Comme visible sur la figure 1, la paroi externe 40 est située en regard d'au moins une partie de la paroi externe 26 du stator 16.

Les parois externes 34, 36, 38 et 40 comprennent chacune des ailettes externes 42 de refroidissement fixées sur les parois externes 34, 36, 38 et 40 et orientées vers l'extérieur du boîtier 28. Chacune des parois externes 34, 36, 38 et 40 comprend, par exemple, au moins trente ailettes externes 42. Sur chacune des parois externes 34, 36, 38 et 40, les ailettes externes 42 sont disposées parallèlement entre elles. Chaque ailette externe 42 s'étend transversalement à l'axe X-X'. De préférence, les ailettes externes 42 sont espacées selon l'axe X-X' entre elles d'environ 1 centimètre. Les ailettes externes 42 sont, par exemple, réalisées en aluminium.

Les ailettes externes 42 sont propres à assurer un échange thermique sur une grande surface entre le fluide interne FI circulant dans l'échangeur 18 et l'air ambiant environnant l'échangeur 18.

Le moteur 10 est par exemple installé dans un train (non représenté). Par exemple, le moteur 10 est un moteur de traction du train.

L'échangeur 18 comprend N conduites primaires 30, N étant un nombre entier entre 1 et 1000. Comme visible dans l'exemple de la figure 3, l'échangeur 18 comprend par exemple 18 conduites primaires 30.

Chaque conduite primaire 30 s'étend longitudinalement selon l'axe X-X' et présente des sections transversales circulaires. En d'autres termes, chaque conduite primaire 30 forme une tube cylindrique s'étendant longitudinalement selon l'axe X-X'.

La conduite secondaire 32 est par exemple délimitée par les parois externes 34, 36, 38 et 40. Typiquement, la conduite secondaire 32 s'étend à l'intérieur du boîtier 28 entre les conduites primaires 30.

Les conduites primaires 30 et la conduite secondaire 32 sont séparées par exemple par les parois des conduites primaires 30, configurées pour transmettre de la chaleur du circuit secondaire 22 vers le circuit primaire 20 par conduction thermique.

Le circuit primaire 20 est adapté pour refroidir le stator 16 et l'échangeur 18.

Comme visible sur les figures 1 à 3, le circuit primaire 20 est formé par une entrée d'aspiration 50, une conduite de refroidissement traversante 52, les conduites primaires 30 de l'échangeur 18 et deux sorties de refoulement 54, 56 prolongeant respectivement les conduites primaires 30 et la conduite de refroidissement traversante 52.

L'entrée d'aspiration 50 comprend un dispositif de ventilation 60 configuré pour conduire le fluide externe FE provenant de l'extérieur dans le circuit primaire 20.

Le dispositif de ventilation 60 est par exemple disposé à l'extérieur du bâti 12. Le dispositif de ventilation 60 comprend un ou plusieurs ventilateurs, configurés pour conduire le fluide externe FE dans le circuit primaire 20.

L'entrée d'aspiration 50 est disposée à l'extérieur du bâti 12. Par exemple, l'entrée d'aspiration 50 est disposée à une position présentant une distance à l'arbre de rotation 24 plus élevée qu'une distance entre chaque partie du stator 16 et l'arbre de rotation 24.

Comme visible sur la figure 1, chaque ventilateur comprend un moteur de ventilation 62, un axe de rotation 64 connecté au moteur de ventilation 62 et des pales de rotor 66 montées sur l'axe de rotation 64. Le dispositif de ventilation 60 est relié électriquement à une source d'alimentation, non représentée, disposée à l'extérieur du moteur 10. La source est par exemple un générateur externe ou un réseau de distribution électrique, comprenant par exemple une caténaire.

Le dispositif de ventilation 60 est configuré pour fonctionner de manière indépendante d'un fonctionnement du moteur 10. En d'autres termes, le dispositif de ventilation 60 est configuré pour effectuer une ventilation forcée du moteur 10. Typiquement, le dispositif de ventilation 60 n'est pas fixé à l'arbre de rotation 24.

Le dispositif de ventilation 60 est apte à tourner à une fréquence de rotation distincte d'une fréquence de rotation du rotor 14.

Le circuit primaire 20 comprend en outre, non représenté, un dispositif de déviation. Le dispositif de déviation du circuit primaire 20 est un piquage débouchant d'une part dans les conduites primaires 30 et d'autre part dans la conduite de refroidissement traversante 52.

La conduite de refroidissement traversante 52 est reliée entre l'entrée d'aspiration 50 à la sortie de refoulement 56. La conduite de refroidissement traversante 52 s'étend, par exemple, longitudinalement selon l'axe X-X'. La conduite de refroidissement traversante 52 traverse le stator 16. En particulier, comme visible sur la figure 3, la conduite de refroidissement traversante 52 traverse la paroi externe 26 du stator 16.

En variante, non représentée, la sortie de refoulement 54 et la sortie de refoulement 56 forment une sortie de refoulement unique.

Le circuit secondaire 22 est isolé du circuit primaire 20, c'est-à-dire qu'il n'y a pas de communication fluidique entre le circuit secondaire 22 et le circuit primaire 20 et que le fluide interne FI circulant dans le circuit secondaire 22 ne peut pas passer dans le circuit primaire 20. En particulier, le circuit secondaire 22 ne communique pas avec l'extérieur du moteur 10.

Le circuit secondaire 22 est formé par des conduits longitudinaux 67 traversant le rotor 14, par exemple en parallèle à l'axe X-X', un espace intérieur 68 de moteur 10, le piquage 33A, la conduite secondaire 32, le piquage 33B et un espace intérieur 69 de moteur 10 reliant le piquage 33B et les conduits longitudinaux 67.

Une hélice 70 est fixée sur l'arbre 24 pour l'entraînement du fluide interne FI dans le circuit secondaire 22. Elle comporte des pales internes 72 dans le circuit 22 et des ailettes circulaires de refroidissement 78 sur une surface extérieure 74 permettant l'échange thermique avec l'air environnant.

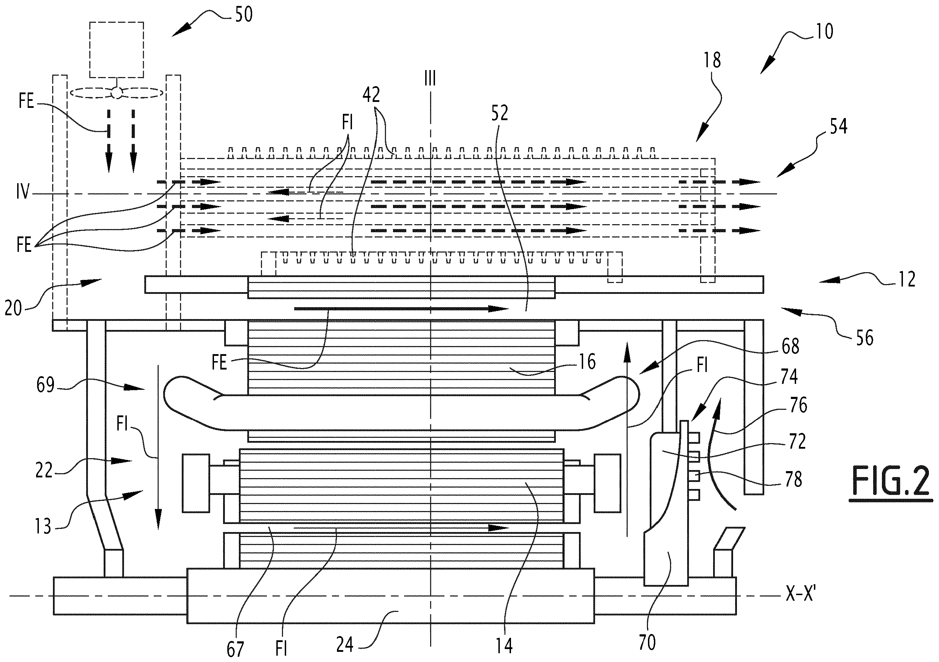

Comme représenté sur les figures 1 et 2 par une flèche 76, par exemple l'air extérieur est en contact avec la surface extérieure 74. Lorsque le moteur 10 est installé sur un véhicule de transport de personnes, tel qu'un train, les déplacements du train créent un courant d'air ambiant rentrant en contact avec la surface extérieure 74.

Le fonctionnement du refroidissement du moteur 10 est à présent décrit, en référence aux figures 1 à 3.

Le fonctionnement du circuit primaire 20 est maintenant décrit.

On a représenté par des flèches épaisses le parcours du fluide externe FE circulant dans le circuit primaire 20. L'entrée d'aspiration 50 du circuit primaire 20 reçoit le fluide externe FE gazeux provenant de l'extérieur du moteur 10, par exemple l'air ambiant situé à l'extérieur du moteur 10. Le fluide externe FE qui rentre dans l'entrée d'aspiration 50 a typiquement une température comprise entre -50°C et +45°C.

Le dispositif de ventilation 60 de l'entrée d'aspiration 50 conduit le fluide externe FE provenant de l'extérieur dans le circuit primaire 20. Le moteur de ventilation 62 du dispositif de ventilation 60 génère une rotation des pales de rotor 66 autour de l'axe de rotation 64 pour créer un courant du fluide externe FE dans le circuit primaire 20. Le dispositif de ventilation 60 est alimenté électriquement par la source d'alimentation, non représentée.

Le dispositif de ventilation 60 fonctionne de manière indépendante du fonctionnement du moteur 10. Selon l'invention, le dispositif de ventilation 60 tourne à une fréquence de rotation distincte d'une fréquence de rotation du rotor 14.

Le fluide externe FE est, dans le circuit primaire 20, séparé par le dispositif de déviation en une première partie du fluide externe FE et une deuxième partie du fluide externe FE.

La première partie du fluide externe FE circule ensuite dans les conduites primaires 30 de l'échangeur 18 et échange une portion d'énergie thermique avec le fluide interne FI circulant dans la conduite secondaire 32. Ensuite, la première partie du fluide externe FE échappe vers l'extérieur du moteur 10 par la sortie de refoulement 54.

La deuxième partie du fluide externe FE circule dans la conduite de refroidissement traversante 52, traversant le stator 16, et échange une portion d'énergie thermique avec le stator 16. Le stator 16 est notamment refroidi par le fluide externe FE circulant dans la conduite de refroidissement traversante 52. Ensuite, la deuxième partie du fluide externe FE échappe vers l'extérieur du moteur 10 par la sortie de refoulement 56.

Typiquement, la température du fluide externe FE en sortie 54, 56 du circuit primaire 20 est comprise entre -30°C et +65°C. Par exemple, le fluide externe FE est échauffé entre l'entrée d'aspiration 50 et la sortie 54, 56 d'environ 20°C.

Le fonctionnement du circuit secondaire 22 est maintenant décrit.

On a représenté par des flèches fines le parcours du fluide interne FI circulant dans le circuit secondaire 22. Le fluide interne FI passe par les conduits longitudinaux 67 traversant le rotor 14, par l'espace intérieur 68, et passe ensuite, par le piquage 33A dans la conduite secondaire 32. Pendant la circulation dans les conduites secondaires 32, le fluide interne FI est refroidit par le fluide externe FE circulant dans les conduites primaires 30.

La température du fluide interne FI au piquage 33A est typiquement plus élevée que la température du fluide externe FE à l'entrée dans les conduites primaires 30. Par exemple, la température du fluide interne FI au piquage 33A est comprise entre 100°C et 120°C et la température du fluide interne FI au piquage 33B est comprise entre 80°C et 95°C.

Le fluide interne FI passe ensuite par le piquage 33B et l'espace intérieur 69 vers les conduits longitudinaux 67.

L'hélice 70 entraîne la circulation du fluide interne FI au sein du circuit secondaire 22 en tournant les pales internes 72. L'hélice 70 est refroidit par échange thermique entre l'air ambiant et la surface externe 74 comprenant les ailettes circulaires 78.

Le fonctionnement de l'échangeur 18 est maintenant décrit plus en détail.

L'échangeur 18 échange de l'énergie thermique entre le fluide externe FE circulant dans les conduites primaires 30 et le fluide interne FI circulant dans la conduite secondaire 32

Lorsque la température du fluide interne FI est plus élevée que la température du fluide externe FE, une portion d'énergie thermique est transmise du fluide interne FI au fluide externe FE. La transmission de la portion d'énergie thermique est par exemple effectuée par conduction thermique.

En particulier, dans l'échangeur 18, le fluide externe FE circule selon une première direction, et le fluide interne FI circule selon une deuxième direction, la première direction étant opposée à la deuxième direction. La première direction forme par exemple avec la deuxième direction un angle de 180 degrés. Le fait d'opposer les directions de circulation du fluide externe FE et du fluide interne FI, permet d'augmenter l'efficacité de l'échangeur 18.

On a représenté sur la figure 5 un deuxième mode de réalisation du moteur 10 selon l'invention.

L'échangeur 18 comprend, dans l'exemple représenté, trois chicanes 80 disposées dans la conduite secondaire 32. Par exemple, chaque chicane 80 s'étend perpendiculaire aux parois externes 34, 36, 38 et 40 du boîtier 28.

La distance entre chaque chicane est inférieure au diamètre du conduit 32. Les chicanes 80 sont configurées pour dévier le fluide interne FI dans la conduite secondaire 32. Ainsi, l'échange thermique entre le fluide externe FE et le fluide interne FI est augmenté.

## Revendications

1. Moteur électrique (10) comprenant :
- un bâti (12) définissant un volume intérieur clos (13) ;
- un rotor (14) et un stator (16) formant une partie d'un circuit magnétique, le rotor (14) et le stator (16) étant logés dans le volume intérieur clos (13) le rotor (14) étant monté mobile en rotation autour d'un axe de rotation (X-X') par rapport au stator (16):
- au moins un échangeur (18) extérieur au bâti (12), l'échangeur (18) comprenant au moins une conduite primaire (30) et au moins une conduite secondaire (32) en contact thermique avec la ou chaque conduite primaire (30), la conduite secondaire (32) étant reliée au volume intérieur clos (13) pour former un circuit secondaire (22) de refroidissement de circulation d'un fluide interne (FI), l'échangeur (18) comportant un boîtier (28) tubulaire traversé de part en part par la ou chaque conduite primaire (30), le boîtier (28) étant de section rectangulaire et comprenant quatre parois externes (34, 36, 38 et 40) s'étendant toutes longitudinalement selon l'axe de rotation (X-X'), des premières parois (34, 36, 38) parmi les parois externes étant situées vers l'extérieur du moteur (10), une deuxième paroi (40) parmi les parois externes étant située vers le bâti (12) du moteur (10), en regard d'au moins une partie d'une paroi externe (26) du stator (16) ;
- un dispositif de ventilation (60) relié à la ou chaque conduite primaire (30) pour forcer la circulation d'un fluide externe (FE) de refroidissement à travers de la ou de chaque conduite primaire (30) entre une entrée d'aspiration (50) et au moins une sortie de refoulement (54, 56), chacune en communication fluidique avec l'extérieur du moteur (10),
le dispositif de ventilation (60) étant apte à tourner à une fréquence de rotation distincte d'une fréquence de rotation du rotor (14) du moteur (10),
**caractérisé en ce que** le stator (16) comporte au moins une conduite de refroidissement traversante (52), la conduite de refroidissement traversante (52) traversant la paroi externe (26) du stator (16), et
le moteur (10) comporte entre l'entrée d'aspiration (50) et la ou chaque sortie de refoulement (54, 56) un dispositif de déviation d'une partie du fluide externe (FE) dont la circulation est forcée au travers de la conduite de refroidissement traversante (52), le dispositif de déviation du circuit primaire (20) étant un piquage débouchant d'une part dans les conduites primaires (30) et d'autre part dans la conduite de refroidissement traversante (52),
un espace délimité entre la ou chaque conduite primaire (30) et le boîtier (28) formant la conduite secondaire (32) reliée, à chaque extrémité, au volume intérieur clos du bâti (12) par un premier piquage (33A) et un second piquage (33B),
le circuit secondaire (22) étant formé par des conduits longitudinaux (67) traversant le rotor (14), un premier espace intérieur (68) de moteur (10), le premier piquage (33A), la conduite secondaire (32), le second piquage (33B) et un second espace intérieur (69) de moteur (10) reliant le second piquage (33B) et les conduits longitudinaux (67).

2. Moteur (10) selon la revendication 1, dans lequel le dispositif de ventilation (60) est disposé à l'extérieur du bâti (12).

3. Moteur (10) selon la revendication 1 ou 2, dans lequel le dispositif de ventilation (60) est alimenté électriquement par une source d'alimentation disposée à l'extérieur du moteur (10).

4. Moteur (10) selon l'une quelconque des revendications 1 à 3, dans lequel l'échangeur (18) comprend au moins une chicane (80) disposée dans la conduite secondaire (32), transversalement à une direction de circulation du fluide externe (FE) dans l'échangeur (18).

5. Moteur (10) selon la revendication 4, dans lequel chaque chicane (80) s'étend perpendiculairement aux parois externes (34, 36, 38 et 40) du boîtier (28).

6. Moteur (10) selon l'une quelconque des revendications 1 à 5, dans lequel le moteur (10) comprend une hélice (70), configuré pour faire circuler le fluide interne (FI) dans l'échangeur (18) selon une direction opposée au sens de circulation du fluide externe (FE) de la ou chaque conduite primaire (30).

7. Moteur (10) selon la revendication 6, dans lequel l'hélice (70) comprend une surface externe (74) en contact avec l'extérieur du moteur (10).

8. Moteur (10) selon la revendication 7, dans lequel la surface externe (74) comprend des ailettes (78).

9. Moteur (10) selon l'une quelconque des revendications 1 à 8, dans lequel l'échangeur (18) comprend des parois externes (34, 36, 38, 40) comportant des ailettes externes (42) de refroidissement.

## Patentansprüche

1. - Elektromotor (10), umfassend:
- einen Rahmen (12), der ein geschlossenes Innenvolumen (13) definiert;
- einen Rotor (14) und einen Stator (16), die einen Teil eines Magnetkreises bilden, wobei der Rotor (14) und der Stator (16) in dem geschlossenen Innenraum (13) montiert sind, wobei der Rotor (14) um eine Drehachse (X-X') in Bezug auf den Stator (16) drehbar montiert ist,
- mindestens einen Wärmetauscher (18) außerhalb des Rahmens (12), der Wärmetauscher (18) umfassend mindestens eine Primärleitung (30) und mindestens eine Sekundärleitung (32) in thermischem Kontakt mit der oder jeder Primärleitung (30), wobei die Sekundärleitung (32) mit dem geschlossenen Innenvolumen (13) verbunden ist, um einen sekundären Kühlkreislauf (22) für die Zirkulation eines internen Fluids (Fl) zu bilden, der Wärmetauscher (18) umfassend ein röhrenförmiges Gehäuse (28), das von der oder jeder Primärleitung (30) vollkommen durchquert wird, wobei das Gehäuse (28) von rechteckigem Querschnitt ist und vier Außenwände (34, 36, 38 und 40) umfasst, die sich alle in Längsrichtung entlang der Drehachse (X-X') erstrecken, wobei die ersten Wände (34, 36, 38) von den Außenwänden zur Außenseite des Motors (10) angeordnet sind, wobei eine zweite Wand (40) von den Außenwänden zu dem Rahmen (12) des Motors (10) angeordnet ist, gegenüber mindestens einem Teil einer Außenwand (26) des Stators (16);
- eine Belüftungsvorrichtung (60), die mit der oder jeder Primärleitung (30) verbunden ist, um die Zirkulation eines externen Fluids (FE) zur Kühlung durch die oder jede Primärleitung (30) zwischen einem Ansaugeinlass (50) und mindestens einem Druckauslass (54, 56) zu erzwingen, die jeweils in Fluidverbindung mit der Außenseite des Motors (10) sind,
wobei die Belüftungsvorrichtung (60) geeignet ist, um sich mit einer Drehfrequenz zu drehen, die sich von einer Drehfrequenz des Rotors (14) des Motors (10) unterscheidet,
**dadurch gekennzeichnet, dass** der Stator (16) mindestens eine durchquerende Kühlleitung (52) umfasst, wobei die durchquerende Kühlleitung (52) die Außenwand (26) des Stators (16) durchquert, und
der Motor (10) zwischen dem Ansaugeinlass (50) und dem oder jedem Förderausgang (54, 56) eine Vorrichtung zur Umleitung eines Teils des externen Fluids (FE) umfasst, dessen Zirkulation durch die durchquerende Kühlleitung (52) erzwungen wird, wobei die Vorrichtung zur Umleitung des Primärkreislaufs (20) ein Stutzen ist, der einerseits in die Primärleitungen (30) und andererseits in die durchquerende Kühlleitung (52) mündet,
einen Raum, der zwischen der oder jeder primären Leitung (30) und dem Gehäuse (28) begrenzt ist, das die sekundäre Leitung (32) bildet, die an jedem Ende durch eine erste Abzweigung (33A) und eine zweite Abzweigung (33B) mit dem geschlossenen Innenvolumen des Rahmens (12) verbunden ist,
wobei der Sekundärkreislauf (22) durch Längsleitungen (67) gebildet wird, die den Rotor (14), einen ersten Innenraum (68) des Motors (10), die erste Abzweigung (33A), die Sekundärleitung (32), die zweite Abzweigung (33B) und einen zweiten Innenraum (69) des Motors (10), der die zweite Abzweigung (33B) und die Längsleitungen (67) verbindet, durchqueren.

2. Motor (10) nach Anspruch 1, wobei die Belüftungsvorrichtung (60) außerhalb des Rahmens (12) angeordnet ist.

3. Motor (10) nach Anspruch 1 oder 2, wobei die Belüftungsvorrichtung (60) von einer Stromquelle, die außerhalb des Motors (10) angeordnet ist, elektrisch versorgt wird.

4. Motor (10) nach einem der Ansprüche 1 bis 3, wobei der Wärmetauscher (18) mindestens eine Ablenkplatte (80) umfasst, die in der Sekundärleitung (32) quer zu einer Zirkulationsrichtung des externen Fluids (FE) in dem Wärmetauscher (18) angeordnet ist.

5. Motor (10) nach Anspruch 4, wobei sich jede Ablenkplatte (80) senkrecht zu den Außenwänden (34, 36, 38 und 40) des Gehäuses (28) erstreckt.

6. Motor (10) nach einem der Ansprüche 1 bis 5, wobei der Motor (10) einen Propeller (70) umfasst, der konfiguriert ist, um das innere Fluid (Fl) in dem Wärmetauscher (18) in einer Richtung zirkulieren zu lassen, die der Zirkulationsrichtung des äußeren Fluids (FE) der oder jeder Primärleitung (30) entgegengesetzt ist.

7. Triebwerk (10) nach Anspruch 6, wobei der Propeller (70) eine Außenfläche (74) umfasst, die in Kontakt mit der Außenseite des Triebwerks (10) ist.

8. Motor (10) nach Anspruch 7, wobei die Außenfläche (74) Rippen (78) umfasst.

9. Motor (10) nach einem der Ansprüche 1 bis 8, wobei der Wärmetauscher (18) Außenwände (34, 36, 38, 40) umfasst, die äußere Rippen (42) zur Kühlung umfassen.

## Claims

1. An electric motor (10), including:
- a frame (12) defining an enclosed inner space (13);
- a rotor (14) and a stator (16) forming part of a magnetic circuit, the rotor (14) and the stator (16) being housed in the enclosed inner space (13), the rotor (14) being mounted moveable in rotation around a rotation axis (X-X') relative to the stator (16);
- at least one exchanger (18) outside the frame (12), the exchanger (18) including at least one primary pipe (30) and at least one secondary pipe (32) in thermal contact with the or each primary pipe (30), the secondary pipe (32) being connected to the enclosed inner space (13) to form a secondary cooling circuit (22) for the circulation of an internal fluid (FI), the exchanger (18) comprising a tubular housing (28) passed all the way through by the or each primary pipe (30), the housing (28) being rectangular in cross-section and comprising four external walls (34, 36, 38 and 40) all extending longitudinally along the rotation axis (X-X'), first walls (34, 36, 38) of the external walls being located towards the outside of the motor (10), a second wall (40) of the external walls being located towards the frame (12) of the motor (10), facing at least part of an external wall (26) of the stator (16);
- a ventilation device (60) connected to the or each primary pipe (30) to force the circulation of an external cooling fluid (FE) through the or each primary pipe (30) between a suction inlet (50) and at least one discharge outlet (54, 56), each in fluid communication with the outside of the motor (10),
the ventilation device (60) being able to rotate at a rotation frequency different from a rotation frequency of the rotor (14) of the motor (10),
**characterized in that** the stator (16) comprises at least one through cooling pipe (52), the through cooling pipe (52) passing through the outer wall (26) of the stator (16), and
the motor (10) comprises, between the suction inlet (50) and the or each discharge outlet (54, 56), a bypass device for part of the external fluid (FE), the circulation of which is forced through the through cooling pipe (52), the bypass device of the primary circuit (20) being a tap opening into the primary pipes (30) on the one hand and into the through cooling pipe (52) on the other hand,
a space delimited between the or each primary pipe (30) and the housing (28) forming the secondary pipe (32) connected, at each end, to the enclosed interior of the frame (12) by a first tap (33A) and a second tap (33B),
the secondary circuit (22) being formed by longitudinal pipes (67) passing through the rotor (14), a first inner space (68) of the motor (10), the first tap (33A), the secondary pipe (32), the second tap (33B) and a second inner space (69) of the motor (10) connecting the second tap (33B) and the longitudinal pipes (67).

2. The motor (10) according to claim 1, wherein the ventilation device (60) is arranged outside the frame (12).

3. The motor (10) according to claim 1 or 2, wherein the ventilation device (60) is supplied with electricity by a power source arranged outside the motor (10).

4. The motor (10) according to any one of claims 1 to 3, wherein the exchanger (18) includes at least one baffle (80) arranged in the secondary pipe (32), transversely to a circulation direction of the external fluid (FE) in the exchanger (18).

5. The motor (10) according to claim 4, wherein each baffle (80) extends perpendicular to the outer walls (34, 36, 38 and 40) of the housing (28).

6. The motor (10) according to any one of claims 1 to 5, wherein the motor (10) includes a helix (70), configured to cause the internal fluid (FI) to circulate in the exchanger (18) along a direction opposite the circulation direction of the external fluid (FE) of the or each primary pipe (30).

7. The motor (10) according to claim 6, wherein the helix (70) includes an outer surface (74) in contact with the outside of the motor (10).

8. The motor (10) according to claim 7, wherein the outer surface (74) includes fins (78).

9. The motor (10) according to any one of claims 1 to 8, wherein the exchanger (18) includes outer walls (34, 36, 38, 40) comprising outer cooling fins (42).
